# EUROPEAN PATENT APPLICATION

(11) **EP 2 568 714 A1**
(43) Date of publication of application: **13.03.2013**
(21) Application number: 12161050.5
(22) Date of filing: 23.03.2012
(51) Int. Cl.: H04N 21/61, H04N 21/436, H04N 21/41, H04N 21/414

(54) **Content reproducing apparatus, content reproducing system, and control method thereof**

(30) Priority: 06.09.2011 KR 20110090320
(71) Applicant: Samsung Electronics Co., Ltd., Suwon-si, Gyeonggi-do, 443-742 (KR)
(72) Inventor: Kim, Hyo-dae, Gyeonggi-do (KR)
(74) Representative: Hancox, Jonathan Christopher

(57) **Abstract**

A method of controlling a content reproducing apparatus is provided, which includes receiving content from an external content providing server 100, receiving a user input for continuous viewing of the content from an external content reproducing apparatus 200, and streaming the content to the external content reproducing apparatus according to the user input.

## Description

The present invention relates to a content reproducing apparatus, a content reproducing system, and a control method thereof, and more particularly to a content reproducing apparatus, a content reproducing system, and a control method thereof, which are applied to a network system.

With the advent of ubiquitous environments, a user's desire to consume preferred media or content at any place has been intensifying. As a result, the spread of personal portable terminal devices has increased and streaming of content that is present in a remote server has become possible. Therefore, a user with various reproducing apparatuses can consume content at various places.

As personal mobility increases, a user's demand to change the renderer occurs during reproduction of content. In a representative case, a user may view a moving image through a mobile phone while traveling, but may change the renderer to a digital television (DTV) in a living room after the user returns home.

If a user who receives and views a moving image from a streaming server on the Internet through a mobile phone that supports streaming moving image reproduction, arrives at home, the user may desire to continue viewing the remaining portion of the moving image through a DTV that is provided in a living room to reproduce a moving image with a higher picture quality than the mobile phone which has a small-sized screen. This is not only because the moving image reproduction quality of the DTV is better than that of the mobile phone due to the technical differences between them, such as the difference in hardware characteristics, but also because problems may occur with communication fees and the battery capacity of the mobile phone.

After a user arrives at home, the user may end the connection for the streaming moving image that is being viewed through a mobile phone, and then search for and reproduce the corresponding moving image that is present in a media server through a DTV, in a living room.

In this case, however, it becomes possible to reproduce the moving image only in when the corresponding content is pre-registered by a digital media server (DMS). The content that can be managed by the DMS may be content stored in a local HDD. However, it is not easy to receive Internet content that requires an Internet connection or premium video on demand (VOD) content that requires a preset session.

The inventive concept addresses at least the above problems and/or disadvantages and provides at least the advantages described below. Accordingly, an object of the invention, at least in exemplary embodiments, is to provide a content reproducing apparatus, a content reproducing system, and a control method thereof, which can support continuous viewing of content without the intervention of a server.

According to an aspect of the invention, a method of controlling a content reproducing apparatus includes receiving content from an external content providing server; receiving a user input for commanding continuous viewing of the content from an external content reproducing apparatus; and streaming the content to the external content reproducing apparatus according to the user input.

The step of streaming the content may include starting a temporary server provided in the content reproducing apparatus; transmitting identification information of the temporary server to the external content reproducing apparatus; and if the external content reproducing apparatus accesses the temporary server according to the identification information, the temporary server starts buffering and providing the content to the external content reproducing apparatus.

The method of controlling the content reproducing apparatus may further include reproducing the received content, wherein the step of streaming the content first streams the content among the content reproduced in the content reproducing apparatus after an input time of the user input.

Here, the identification information of the temporary server may be a universal resource identifier (URI) of the temporary server.

The method of controlling the content reproducing apparatus may further include releasing digital rights management (DRM) of the received content, wherein the step of streaming the content streams the content of which the DRM is released.

In this case, the content reproducing apparatus or the external content reproducing apparatus may be one of a TV, a mobile phone, a PC, a notebook computer, a PDA, or a tablet PC.

According to another aspect of the invention, a content reproducing apparatus includes a communication interface unit receiving content from an external content providing server; a user interface unit receiving a user input; and a control unit operating to stream the content to an external content reproducing apparatus if the user input which commands a continuous viewing of the content is input from the external content reproducing apparatus.

The control unit may operate to start a temporary server provided in the content reproducing apparatus, to transmit identification information of the temporary server to the external content reproducing apparatus, and to control the temporary server to buffer and provide the content to the external content reproducing apparatus if the external content reproducing apparatus accesses the temporary server according to the identification information.

The content reproducing apparatus may further include a content reproducing unit reproducing the received content, wherein the control unit first streams the content among the content reproduced in the content reproducing apparatus after an input time of the user input.

Here, the identification information of the temporary server may be a universal resource identifier (URI) of the temporary server.

The content reproducing apparatus may further include a digital rights management (DRM) releasing unit releasing DRM of the received content, wherein the control unit streams the content of which the DRM is released.

In this case, the content reproducing apparatus or the external content reproducing apparatus may be one of a TV, a mobile phone, a PC, a notebook computer, a PDA, or a tablet PC.

According to another aspect of the invention, a system for supporting continuous viewing of content includes a first content reproducing apparatus receiving the content from an external content providing server and streaming the content to a second content reproducing apparatus according to a user input for the continuous viewing of the content; and the second content reproducing apparatus receiving and reproducing the streamed content from the first content reproducing apparatus.

The first content reproducing apparatus may start a temporary server provided in the content reproducing apparatus, transmit identification information of the temporary server to the second content reproducing apparatus, and control the temporary server to buffer and provide the content to the second content reproducing apparatus if the second content reproducing apparatus accesses the temporary server according to the identification information.

The first content reproducing apparatus may reproduce the received content, and first streams the content among the content reproduced in the content reproducing apparatus to the second content streaming apparatus after an input time of the user input.

According to another aspect of the invention, a method of controlling a system for supporting continuous viewing of content includes receiving the content from an external content providing server at a first content reproducing apparatus and streaming the content to a second content reproducing apparatus according to a user input for the continuous viewing of the content; and receiving and reproducing the streamed content from the first content reproducing apparatus at the second content reproducing apparatus.

The step of streaming the content to the second content reproducing apparatus may include the first content reproducing apparatus starting a temporary server provided in the first content reproducing apparatus; the first content reproducing apparatus transmitting identification information of the temporary server to the second content reproducing apparatus from the first content reproducing apparatus; and if the second content reproducing apparatus accesses the temporary server according to the identification information provided by the temporary server in the first content reproducing apparatus, buffering and providing the content to the second content reproducing apparatus from the first content reproducing apparatus.

The method of controlling the system for supporting the continuous viewing of the content may further include the first content reproducing apparatus reproducing the received content, wherein the step of streaming the content to the second content reproducing apparatus may first stream the content among the content being reproduced after an input time of the user input.

The above and other aspects, features and advantages of the exemplary embodiments will be more apparent from the following detailed description when taken in conjunction with the accompanying drawings, in which:
FIG. 1A is a diagram illustrating the schematic configuration of a system for supporting continuous viewing of content according to an exemplary embodiment;
FIG. 1B is a diagram illustrating an implementation example in which a system for supporting continuous viewing of content is applied to a DLNA network according to an exemplary embodiment;
FIG. 2A is a block diagram illustrating the configuration of a content reproducing apparatus according to an exemplary embodiment;
FIG. 2B is a block diagram illustrating the configuration of a content reproducing apparatus according to another exemplary embodiment;
FIG. 3A is a diagram illustrating a content streaming operation performed by a content reproducing apparatus according to an exemplary embodiment;
FIG. 3B is a diagram illustrating continuous viewing of content performed by a system for supporting the continuous viewing of content that includes the content reproducing apparatus illustrated in FIG. 3A;
FIG. 4 is a diagram illustrating a user menu for selecting an appliance for continuous viewing of content according to an exemplary embodiment;
FIG. 5 is a flowchart illustrating a method of controlling a content reproducing apparatus according to an exemplary embodiment; and
FIG. 6 is a sequence diagram illustrating an operation of a system for supporting continuous viewing of content according to an exemplary embodiment.

Hereinafter, exemplary embodiments of the inventive concept will be described in detail with reference to the accompanying drawings.

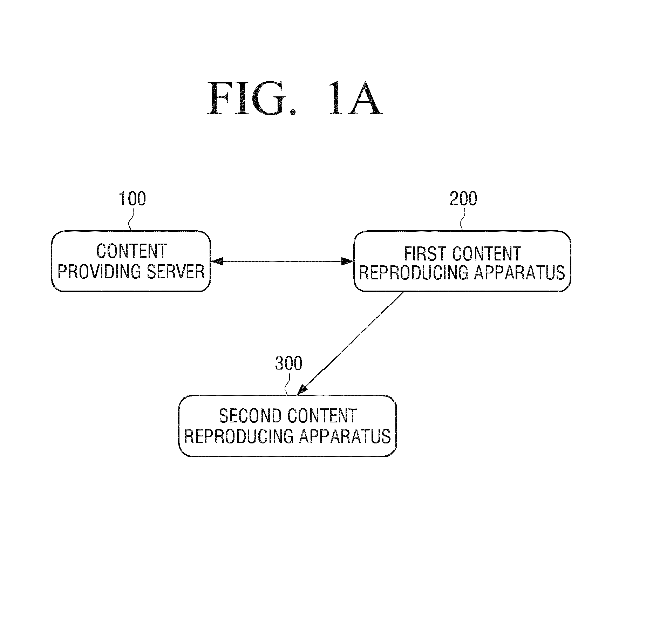

FIG. 1A is a diagram illustrating the schematic configuration of a system for supporting continuous viewing of content according to an exemplary embodiment.

As illustrated in FIG. 1A, a system for supporting continuous viewing of content may include a content providing server 100, a first content reproducing apparatus 200, and a second content reproducing apparatus 300. Here, the content providing server 100, the first content reproducing apparatus 200, and the second content reproducing apparatus 300 may be connected through an IP network such as Ethernet and Wi-Fi and a home network such as Digital Living Network Alliance (DLNA), but the connection is not limited thereto.

The content providing server 100 provides digital media content.

The content providing server 100 may provide Internet content, a premium VOD, a local file, external content connected through a DLNA network, and the like. Depending on the circumstance, the content providing server 100 may be provided with a broadcast receiving apparatus for receiving digital broadcasts and broadcasting middleware mounted thereon, and may be implemented by a PC, a set top box (STB), a VCR, a CD player, a DVD player, an MP₃ player, a TV tuner, a radio tuner, and the like.

The first content reproducing apparatus 200 performs the selection of digital media content and control and execution of the selected media content. Here, the first content reproducing apparatus 200 may be implemented by a TV, a mobile phone, a PC, a notebook computer, a PDA, a tablet PC, a home trading system (HTS), and the like.

The second content reproducing apparatus 300 receives and reproduces streamed content from the first content reproducing apparatus 200 according to a continuous viewing command for the content of the first content reproducing apparatus 200. Here, the second content reproducing apparatus 300 may be implemented by, but is not limited to, a TV, a mobile phone, a PC, a notebook computer, a PDA, a tablet PC, and the like, and may include stereo speakers, a fountain that is controlled by music, and the like.

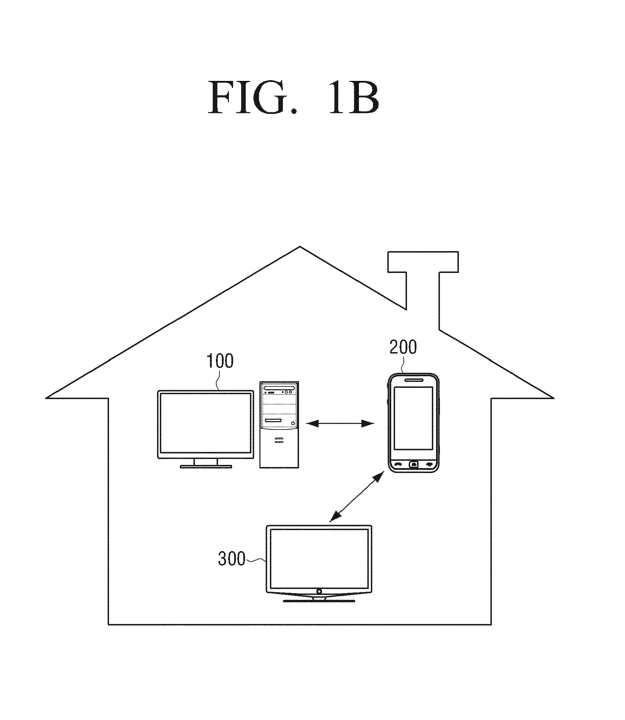

FIG. 1B is a diagram illustrating an implementation example in which a system for supporting continuous viewing of content according to an exemplary embodiment is applied to a DLNA network.

Referring to FIG. 1B, a home network system may include a DMS 100 that is implemented by a PC, a digital media player (DMP) 200 that is implemented by a mobile phone, and a DRM 300 that is implemented by a digital TV.

DLNA is an abbreviation of "Digital Living Network Alliance", and is an organization for standardization for digital information technology products, which is established to appropriate the standard specification, so that a digital AV/C appliance and a personal computer in a home network are connected to each other for mutual compatibility of data such as music, moving images, and still images.

The DLNA network is based on a universal plug and play (UPnP) protocol, and is a wired and wireless network configured to include appliances (hereinafter referred to as "UPnP appliances") which are connected to the DLNA network to perform communication using a format based on the UPnP protocol.

According to the UPnP protocol, the content providing server 100 may be implemented by a digital media server (DMS), the first content reproducing apparatus 200 may be implemented by a DMP, and the second content reproducing apparatus 300 may be implemented by a DRM.

The DMS (for example, implemented by a PC) 100 serves to provide digital media content. Here, the digital media content may be, for example, content that is stored in a local HDD.

The DMP (for example, implemented by a mobile phone) 200 is a DRM that includes a UPnP control point (CP), and serves to perform functions of a media renderer device (MRD) and a media renderer control point (MRCP), that is, to perform selection of digital media content, control, and execution of the selected digital media content. Here, the digital media content may be Internet content, premium VOD content, a local file, content managed by the DMS 100, and the like.

The DRM (for example, implemented by a digital TV) 300 receives and reproduces streamed content from the DMP 200 while the DMP 200 reproduces or starts reproduction of the received content according to a user command input to the DMP 200.

In the above-described exemplary embodiment, the DMP 200 is implemented by a mobile phone and the DRM 300 is implemented by a digital TV. However, this is merely exemplary, and it is also possible that the DMP 200 is implemented by a digital TV and the DRM 300 is implemented by a mobile phone. Further, the DMP 200 and the DRM 300 may be implemented by a PC, a notebook computer, a PDA, a tablet PC, and the like.

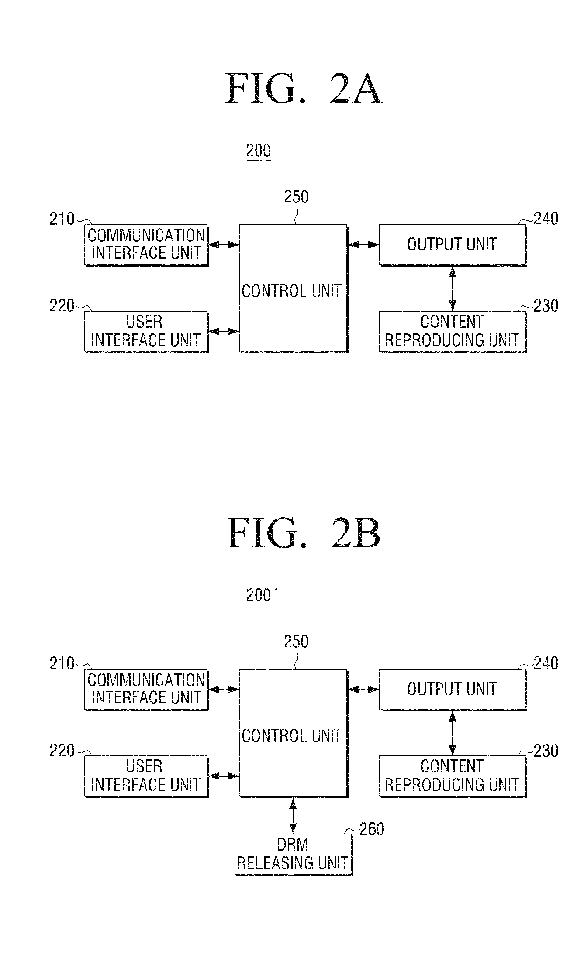

FIG. 2A is a block diagram illustrating the configuration of a content reproducing apparatus according to an exemplary embodiment.

Referring to FIG. 2A, a content reproducing apparatus 200 includes a communication interface unit 210, a user interface unit 220, a content reproducing unit 230, an output unit 240, and a control unit 250.

The content reproducing apparatus 200 illustrated in FIG. 2A may be implemented by the DMP illustrated in FIG. 1A. Specifically, the content reproducing apparatus 200 may be a TV, a mobile phone, a PC, a notebook computer, a PDA, or a tablet PC.

The communication interface unit 210 receives content from an external content providing server. Here, the external content providing server may provide Internet content, a premium VOD, a local file, external content connected through a DLNA network, and the like.

If the user interface unit 220 is implemented in the form of a touch screen having a structure in which a display and a touchpad are mutually layered, the user interface unit 220 may be used as an output unit to be described later. On the other hand, the touch screen may be configured to detect not only a touch input position and area but also touch input pressure.

The content reproducing unit 230 reproduces the content that is received through the communication interface unit 210 or the content that is stored in a storage unit (not illustrated).

The output unit 240 outputs the content that is reproduced through the content reproducing unit 230. Here, the output unit 240 may be implemented in a form that includes a display (not illustrated) and a speaker (not illustrated).

The control unit 250 controls the whole operation of the content reproducing apparatus 200.

In particular, if a user input for commanding continuous viewing of the content is input from the external content reproducing apparatus (not illustrated) through the user interface unit 220, the control unit 250 streams the received content to the external content reproducing apparatus.

Specifically, the control unit 250 may start a temporary server provided in the content reproducing apparatus 200, and transmit identification information of the temporary server to the external content reproducing apparatus (not illustrated). Here, the identification information of the temporary server may be a universal resource identifier (URI).

Thereafter, if the external content reproducing apparatus (not illustrated) accesses the temporary server provided in the content reproducing apparatus 200 according to the identification information, the control unit 250 may control the temporary server to buffer and provide the corresponding content to the external content reproducing apparatus (not illustrated).

According to circumstances, the control unit 250 may first stream the content among the content reproduced in the content reproducing apparatus to the external content reproducing apparatus after an input time of the user input s (not illustrated).

In this case, the control unit 250 may transmit content reproduction environment information such as volume and caption setting to the external content apparatus, so that the content is reproduced in the same reproduction environment as the reproduction environment of the content reproducing apparatus 100 in the external content reproducing apparatus (not illustrated).

On the other hand, in the case of receiving and reproducing the streamed content from the content reproducing apparatus 200, the external content reproducing apparatus (not illustrated) may directly convert a screen size, resolution, and color support of the received content to suit a format of the external content reproducing apparatus 300 to reproduce the content. However, according to circumstances, it is also possible to receive and reproduce the content of which the format has already been converted by the content reproducing apparatus 200.

FIG. 2B is a block diagram illustrating the configuration of a content reproducing apparatus according to another exemplary embodiment.

Referring to FIG. 2B, a content reproducing apparatus 200' includes a communication interface unit 210, a user interface unit 220, a content reproducing unit 230, an output unit 240, a control unit 250, and a DRM releasing unit 260.

Detailed description of the constituent elements illustrated in FIG. 2B, which overlap the constituent elements illustrated in FIG. 2A, will be omitted.

The DRM releasing unit 260 releases digital rights management (DRM) of the content that is received through the communication interface 210.

Specifically, the DRM releasing unit 260 may release the DRM of the received content using a DRM releasing program.

In this case, if a user input for commanding continuous viewing of the content is input from an external content reproducing apparatus (not illustrated) through the user interface unit 220, the control unit 250 may operate to stream the content of which the DRM has been released by the DRM releasing unit 260 to the external content reproducing apparatus (not illustrated).

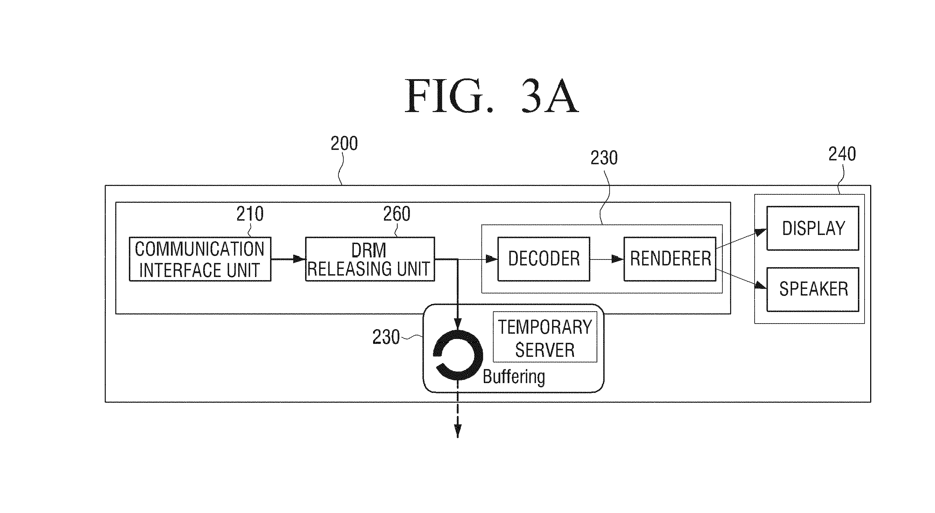

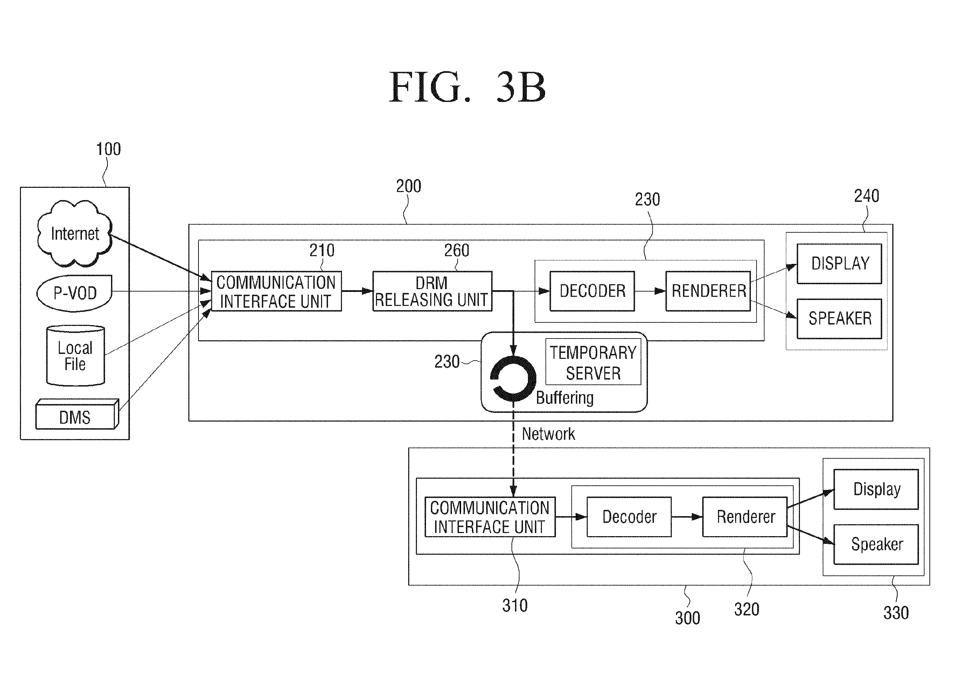

FIGS. 3A and 3B are diagrams illustrating the operations of a content reproducing apparatus and a system for supporting continuous viewing of content according to an exemplary embodiment.

FIG. 3A is a diagram illustrating a content streaming operation performed by a content reproducing apparatus according to an exemplary embodiment.

Referring to FIG. 3A, if DRM-locked content is received through the communication interface unit 210, the DRM of the content may be released by the DRM releasing unit 220.

The DRM-released content may be reproduced using a decoder and a renderer provided in the content reproducing unit 230, and the reproduced content may be provided to a user through a display and a speaker provided in the output unit 240.

On the other hand, if the user input for commanding continuous viewing of the content is input from the external content reproducing apparatus through the user interface unit (not illustrated) during reproduction of the content, the temporary server starts its operation through the control unit 230, and the identification information of the temporary server may be provided to the external content reproducing apparatus.

Then, if the external content reproducing apparatus accesses the temporary server using the received identification information, the DRM-released content may be buffered and streamed to the external content reproducing apparatus. In this case, the content may be streamed to the external content reproducing apparatus after a time where the user input is received.

FIG. 3B is a diagram illustrating continuous viewing of content performed by a system for supporting the continuous viewing of content that includes the content reproducing apparatus illustrated in FIG. 3A.

Referring to FIG. 3B, according to a preset event, Internet content, premium VOD content, a local file, content managed by DMS, and the like, may be provided from the external content providing server 100 to the content reproducing apparatus 200 through the communication interface unit 210.

Accordingly, the content reproducing apparatus 200 may perform the operation as described above with reference to FIG. 3A.

On the other hand, another content reproducing apparatus 300, which receives and reproduces the streamed content for continuous viewing from the content reproducing apparatus 200, may receive the DRM-released content through the communication interface unit 310.

In this case, if the content is reproduced through the content reproducing apparatus 200, the content may be streamed after the input time of the user input.

The content received through the communication interface unit 310 is reproduced using the decoder and the renderer provided in the content reproducing unit 320, and the reproduced content is provided to the user through the display and the speaker provided in the output unit 330.

Accordingly, the content reproducing apparatus 300 may receive and reproduce the streamed content for continuous viewing through the temporary server of the content reproducing apparatus 200 without connecting to the external content providing server 100.

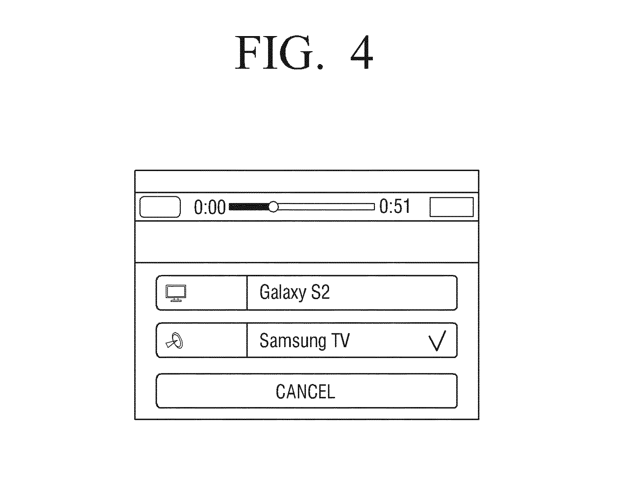

FIG. 4 is a diagram illustrating a user menu for selecting an appliance for continuous viewing of content according to an exemplary embodiment.

As illustrated in FIG. 4, if it is intended to change the reproducing appliance when the content reproduction starts or the content is reproduced in the content reproducing appliance 200 or 200', the appliance to be changed may be selected through a user menu provided in the content reproducing appliance 200 or 200'.

For example, the content reproducing appliance 200 or 200' may search for appliances that may reproduce the subject content and display corresponding information. For example, if the subject content is a moving image file, it searches only for appliances that may reproduce the moving image file and displays the corresponding information.

On the other hand, information on the respective appliances, that is, information on an appliance name, type, and reproducible content may be pre-registered.

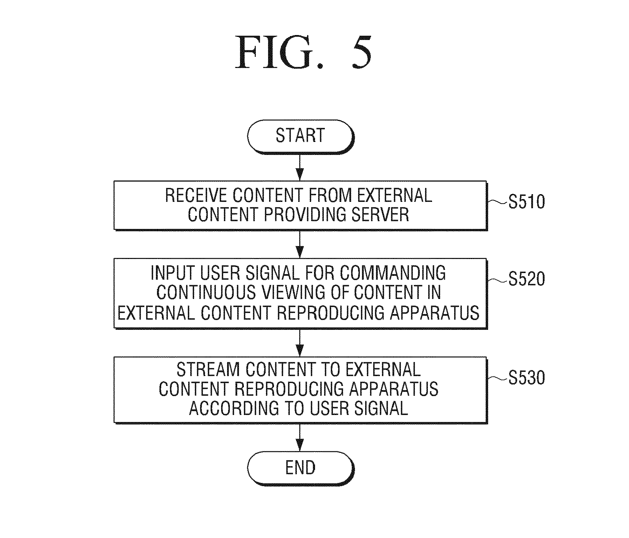

FIG. 5 is a flowchart illustrating a method of controlling a content reproducing apparatus according to an exemplary embodiment.

According to a method of controlling a content reproducing apparatus illustrated in FIG. 5, content is first received from the external content providing server (S510). Here, the content reproducing apparatus may be implemented by one of a TV, a mobile phone, a PC, a notebook computer, a PDA, and a tablet PC.

Then, a user input for commanding continuous viewing of the content is received from the external content reproducing apparatus (S520).

Thereafter, according to the user input in step S520, the content is streamed to the external content reproducing apparatus (S530).

In the step of streaming the content (S530), the temporary server provided in the content reproducing apparatus starts and the identification information of the temporary server is transmitted to the external content reproducing apparatus. Then, in the step of streaming the content (S530), if the external content reproducing apparatus accesses the temporary server according to the transmitted identification information, the temporary server buffers and provides the corresponding content to the external content reproducing apparatus. Here, the identification information of the temporary server may be the universal resource identifier (URI) of the temporary server.

On the other hand, if the content received in step S510 is being reproduced, the content among the content reproduced in the content reproducing apparatus is first streamed in step S530 after the input time of the user input in step S520.

Further, the step of releasing the DRM of the content received in step S510 may be further provided. In this case, the DRM-released content may be streamed in the step of streaming the content (S530).

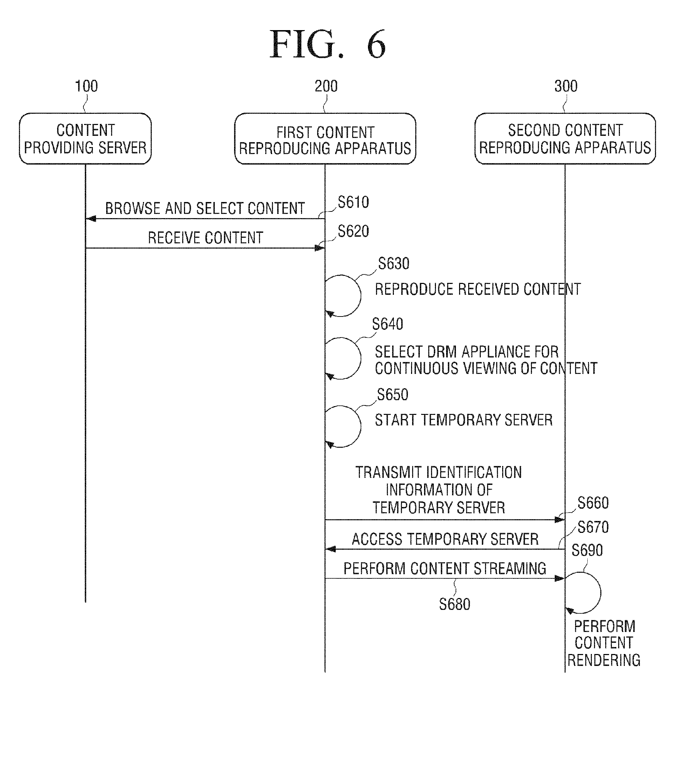

FIG. 6 is a sequence diagram illustrating an operation of a system for supporting continuous viewing of content according to an exemplary embodiment.

Referring to FIG. 6, the first content reproducing apparatus 200 browses the content by accessing the content providing server 100, and selects desired content (S610).

Then, the first content reproducing apparatus 200 receives the selected content from the content providing server 100 (S620), and reproduces the received content (S630).

Then, the first content reproducing apparatus 200 selects the second content reproducing apparatus for continuous viewing of the content being reproduced (S640).

Then, the first content reproducing apparatus 200 starts the temporary server (S650), and transmits the identification information of the temporary server to the selected second content reproducing apparatus 300 (S660).

The second content reproducing apparatus 300 selected as described above accesses the temporary server of the first content reproducing apparatus 200 using the transmitted identification information of the temporary server (S670), and the first content reproducing apparatus 200 streams the corresponding content to the second content reproducing apparatus 300 (S680).

Thereafter, the second content reproducing apparatus 300 performs rendering of the streamed content (S690).

According to an aspect of an exemplary embodiment, the first content reproducing apparatus 200 streams the content being reproduced to the second content reproducing apparatus 300. Alternatively, it is also possible to stream the content before being reproduced to the second content reproducing apparatus 300.

As described above, according to the exemplary embodiments, all content reproduced in the current content reproducing apparatus may be provided to another content reproducing apparatus regardless of the type of the content.

Further, through addition of DRMCP and DMS to a mobile appliance or a player appliance without changing the existing DTV, a system that is compatible with the existing system may be constructed.

On the other hand, a storage medium that includes a program for executing a method of controlling a content reproducing apparatus according to an exemplary embodiment, that is, a computer readable recording medium, may be included. Here, the computer readable recording medium includes all types of recording devices in which data that may be read by a computer system is stored. Examples of a computer readable recording medium may be a ROM, a RAM, a CD-ROM, a magnetic tape, a floppy disk, and an optical data storage device. Further, the computer readable recording medium may be distributed to a computer system connected through a network, and codes that may be read by a computer in a distributed system that may be stored and executed.

While the invention has been shown and described with reference to certain exemplary embodiments thereof, it will be understood by those skilled in the art that various changes in form and detail may be made therein without departing from the scope of the invention, as defined by the appended claims.

## Claims

1. A method of controlling a content reproducing apparatus comprising:
receiving content from an external content providing server;
receiving an input of a user signal for commanding continuous viewing of the content from an external content reproducing apparatus; and
streaming the content to the external content reproducing apparatus according to the user signal.

2. The method of controlling a content reproducing apparatus as claimed in claim 1, wherein the step of streaming the content comprises:
starting a temporary server provided in the content reproducing apparatus;
transmitting identification information of the temporary server to the external content reproducing apparatus; and
if the external content reproducing apparatus accesses the temporary server according to the identification information, the temporary server buffers and provides the content to the external content reproducing apparatus.

3. The method of controlling a content reproducing apparatus as claimed in claim 2, further comprising:
reproducing the received content,
wherein the step of streaming the content among the content reproduced in the content reproducing apparatus first streams the content after an input time of the user signal.

4. The method of controlling a content reproducing apparatus as claimed in any one of claims 1 to 4, wherein the identification information of the temporary server is a universal resource identifier (URI) of the temporary server.

5. The method of controlling a content reproducing apparatus as claimed in any one of claims 1 to 5, further comprising releasing digital rights management (DRM) of the received content,
wherein the step of streaming the content streams the content of which the DRM is released.

6. The method of controlling a content reproducing apparatus as claimed in claim 1, wherein the content reproducing apparatus or the external content reproducing apparatus is one of a TV, a mobile phone, a PC, a notebook computer, a PDA, or a tablet PC.

7. A content reproducing apparatus comprising:
a communication interface unit which receives content from an external content providing server;
a user interface unit which receives an input of a user signal; and
a control unit which operates to stream the content to an external content reproducing apparatus if the user signal for commanding continuous viewing of the content is input from the external content reproducing apparatus.

8. The content reproducing apparatus as claimed in claim 7, wherein the control unit operates to start a temporary server provided in the content reproducing apparatus, transmit identification information of the temporary server to the external content reproducing apparatus, and control the temporary server buffer and provide the content to the external content reproducing apparatus if the external content reproducing apparatus accesses the temporary server according to the identification information.

9. The content reproducing apparatus as claimed in claim 8, further comprising:
a content reproducing unit which reproduces the received content,
wherein the control unit first streams the content among the content reproduced in the content reproducing apparatus after an input time of the user signal.

10. The content reproducing apparatus as claimed in claim 8, wherein the identification information of the temporary server is a universal resource identifier (URI) of the temporary server.

11. The content reproducing apparatus as claimed in any one of claims 7 to 10, further comprising:
a digital rights management (DRM) releasing unit which releases DRM of the received content,
wherein the control unit streams the content of which the DRM is released.

12. The content reproducing apparatus as claimed in any one of claims 7 to 11, wherein the content reproducing apparatus or the external content reproducing apparatus is one of a TV, a mobile phone, a PC, a notebook computer, a PDA, or a tablet PC.

13. A system for supporting continuous viewing of content comprising:
a first content reproducing apparatus which receives the content from an external content providing server and streams the content according to a user signal which commands the continuous viewing of the content; and
a second content reproducing apparatus which receives and reproduces the streamed content from the first content reproducing apparatus.

14. The system for supporting continuous viewing of content as claimed in claim 13, wherein the first content reproducing apparatus starts a temporary server provided in the content reproducing apparatus, transmits identification information of the temporary server to the second content reproducing apparatus, and controls the temporary server buffer and provide the content to the second content reproducing apparatus if the second content reproducing apparatus accesses the temporary server according to the identification information.

15. The system for supporting continuous viewing of content as claimed in claim 13, wherein the first content reproducing apparatus reproduces the received content, and first streams the content among the content reproduced in the content reproducing apparatus to the second content streaming apparatus after an input time of the user signal.
